# FASCICULE DE BREVET EUROPEEN

(11) **EP 2 029 677 B1**
(45) Date de publication et mention de la délivrance du brevet: **08.09.2010**
(21) Numéro de dépôt: 07734631.0
(22) Date de dépôt: 22.05.2007
(51) Int. Cl.: C09C 3/04, C09C 3/10, B02C 23/06, C09K 3/10, C08K 3/26, C01F 11/18

(54) **PROCEDE DE BROYAGE A SEC DE MATERIAUX CONTENANT UN MINERAI CARBONATE**
VERFAHREN ZUR TROCKENMAHLUNG VON CARBONATERZ ENTHALTENDEN STOFFEN
METHOD FOR DRY MILLING OF MATERIALS WHICH CONTAIN CARBONATE ORE

(30) Priorité: 24.05.2006 FR 0604690
(43) Date de publication de la demande: 04.03.2009
(73) Titulaire: COATEX S.A.S., 69730 Genay (FR); Omya Development AG, 4665 Oftringen (CH)
(72) Inventeur: GANE, Patrick, A., C., 4852 Rothrist (CH); BURI, Matthias, 4852 Rothrist (CH); BLUM, René, Vinzenz, 4915 St. Urban (CH); MONGOIN, Jacques, 69650 Quincieux (FR)
(74) Mandataire: Richebourg, Michel François
(86) Numéro de dépôt international: PCT/IB2007/001323
(87) Numéro de publication internationale: WO 2007/138410

(56) Documents cités:
- EP-A2- 0 296 610
- WO-A-01/29125
- WO-A-02/081573
- WO-A-2005/026252
- WO-A-2005/071003
- US-A1- 2003 045 647

## Description

Un premier objet de la présente invention est un procédé de broyage à sec d'un matériau contenant un minerai carbonaté, caractérisé en ce que ledit procédé comprend les étapes de :
a) broyer à sec ledit matériau dans au moins une unité de broyage :
   ( 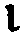 ) en présence d'au moins un polymère polyalkylène glycol où 90 % au moins, préférentiellement 95 % au moins, très préférentiellement 98 % au moins des unités monomères formant le squelette dudit polymère sont constitués d'oxyde d'éthylène, d'oxyde de propylène, ou leurs mélanges, et dont le poids moléculaire est au moins égal à 400 g/mole,
   ( 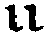 ) de telle manière à ce que la quantité d'eau dans ladite unité de broyage est inférieure à 10 % en poids sec dudit matériau dans ladite unité de broyage ;
b) éventuellement classifier le matériau broyé à sec selon l'étape a) avec au moins une unité de classification ;
c) éventuellement répéter les étapes a) et / ou b) sur tout ou partie du matériau broyé issu de l'étape a) et / ou b).

Un autre objet de la présente invention est un produit issu des étapes a) et / ou b) et /ou c) du procédé selon l'invention.

Un troisième objet de la présente invention est l'utilisation dudit produit issu des étapes a) et / ou b) et / ou c) dans des mastics, des papiers, des peintures, des plastiques ou dans des formulations pour l'agriculture.

Les additifs, introduits pendant l'étape de broyage de matériaux contenant des minerais carbonatés, sont utilisés depuis longtemps pour faciliter le procédé de broyage, pour assister au processus de réduction de tailles des particules, et pour augmenter la capacité et l'efficacité du procédé de broyage. De tels additifs sont connus comme des agents d'aide au broyage.

Par opposition aux agents d'aide au broyage utilisables pour le broyage de matériaux contenant des minerais carbonatés dans un environnement humide, mettant en oeuvre une teneur en eau en excès de 10 % en poids par rapport au poids sec de matériau à broyer, les agents d'aide au broyage utilisables pour le broyage de tels matériaux en milieu sec sont sujets à des énergies d'adsorption et de désorption de surface différentes de celles relatives aux agents de broyage utilisables en milieu liquide. De plus, et parmi encore d'autres différences, ces agents de broyage à sec sont tout particulièrement destinés à être mis en oeuvre dans un environnement hydrophobe, par opposition à l'environnement hydrophile où sont mis en oeuvre les agents de broyage en milieu humide.

Le broyage à sec est généralement réalisé dans un broyeur et résulte d'une opération de broyage autogène, où les particules à broyer subissent des impacts les unes contre les autres, ou résultent d'impacts additionnels avec un ou plusieurs autres matériaux, tels que des billes de broyage. Un tel broyage peut avoir lieu, par exemple, dans un broyeur à boulet, à vibration ou à roue. En fonction du type de broyage, ledit broyage peut avoir lieu dans une chambre de broyage stationnaire ou rotative. Les agents de broyage à sec peuvent être ajoutés à l'alimentation et / ou dans la chambre de broyage et / ou au cours du procédé de broyage.

On peut trouver une discussion générale sur les agents de broyage à sec et leur rôle durant le procédé de broyage dans "Beitrag zur Aufklärung der Wirkungsweise von Mahlhilfsmitteln" par K. Graichen et al. publié dans "Freiberger Forschungshefte" VEB Deutscher Verlag für Grundstoffindustrie, Leipzig, Germany (1975). Il existe un autre article général sur le broyage à sec du carbonate de calcium : "Calcium Carbonate" by F.W. Tegethoff (Birkhäuser Verlag, 2001).

De manière générale, les agents de broyage à sec peuvent être classés dans l'une des 3 catégories suivantes.

Le premier groupe d'agents d'aide au broyage à sec de matériaux contenant un minerai carbonaté, et plus particulièrement du carbonate de calcium, est composé traditionnellement des acides faibles de Brönstedt, tels que les acides formique, acétique, lactique, lignitique, adipique, lactique, ou les acides gras, et en particulier les acides palmitique et stéarique, ou les sels des acides faibles de Brönstedt, tels que les sels de lignine sulfonate.

Dans ce contexte, le document FR 2 863 914 décrit l'utilisation d'acide adipique durant le broyage à sec d'un matériau minéral, en vue d'éviter la ré-agglomération ultérieure du matériau broyé ou la formation de poussière durant le broyage. Toutefois, un tel acide limite l'utilisation du matériau broyé dans des produits nécessitant une résistivité électrique élevée, tels que les câbles de PVC. De tels additifs sont aussi utilisés pour augmenter de manière spécifique l'efficacité du broyage.

A cette fin, le document FR 2 203 670 décrit un agent de dispersion pour le broyage à sec sous la forme d'esters aliphatiques comme les acétates aliphatiques présentant l'inconvénient d'être facilement saponifiés dans des conditions alcalines.

Les sels de lignine sulfonates, couramment mis en oeuvre dans l'industrie cimentaire, présentent le désavantage de conduire à une coloration brune et de diminuer la résistivité du matériau final, ces deux inconvénients limitant les applications potentielles desdits sels.

Enfin, le document WO 98 / 21158 décrit une méthode pour le broyage à sec de kaolins calcinés par mise en oeuvre d'un polyacrylate d'ammonium comme agent d'aide au broyage à sec et ce, en vue d'améliorer la coulabilité du produit broyé, l'efficacité du broyage, ainsi que les propriétés rhéologiques du produit final dans lequel sont mis en oeuvre les produits broyés selon cette invention.

Un deuxième groupe d'agents d'aide au broyage à sec est constitué par les bases faibles de Brönstedt ; ce groupe inclut notamment les amines.

Illustrant les deux groupes précédents, l'homme du métier connaît le document EP 0 510 890, qui décrit un dispositif pour le broyage de matériaux particulaires solides, et plus particulièrement de matériaux inorganiques, qui peuvent être à base de carbonate, sensiblement à l'état sec, de même qu'un procédé de broyage par attrition de tels matériaux dans le but de répartir de manière uniforme l'additif d'aide au broyage sur le matériau inorganique. L'agent de traitement peut être un acide gras, et notamment l'acide stéarique qui est exemplifié, une amine ou un ammonium quaternaire ayant au moins un groupement alkyle ou un silane substitué.

En outre, de tels additifs sont bien connus pour leur capacité à minimiser la formation d'aggrégats de matériaux broyés au cours ou après le procédé de broyage à sec.

Le document GB 2 179 268 décrit un procédé de broyage d'un matériau, pouvant inclure un carbonate, sensiblement à l'état sec. Les additifs introduits durant ce procédé en vue de minimiser la formation d'aggrégats comprennent des acides gras, tels que l'acide stéarique (qui est aussi exemplifié), et des sels d'acides gras tels que des agents de surface de nature cationique, tels que des amines, et tout particulièrement des diamines (l'alkyl propylène diamine étant exemplifié), et des silanes. Des alkyls et des alkyls phényls éthoxylés sont aussi décrits, et particulièrement l'octyl phenoxy polyethoxyethyl benzyl ether. Les esters de phosphates, les sels mono- ou di-alcali métalliques d'un copolymère de l'anhydride maléique et le di-isobutylène sont aussi mentionnés. Enfin, les suphosuccinates sont aussi décrits comme utilisables dans ce le procédé selon ce document.

Au regard des deux groupes d'agents d'aide au broyage à sec précédemment mentionnés, le document FR 2 863 914 révèle un net inconvénient relatif à l'acide stéarique : il ne permet pas d'obtenir des particules broyées d'un diamètre inférieur à 25 µm.

Il est aussi important de mentionner que les éthoxylats, les esters et les éthers mentionnés plus haut, peuvent conduire à la formation de mousse dans les applications ultérieures auxquelles sont destinés les matériaux broyés à sec. De plus, les silanes apolaires sont bien connus comme pouvant créer des problèmes, tels que des dépôts, dans des applications papetières au final. Enfin, les sels de suphosuccinates peuvent altérer la résistivité électrique des produits finaux contenant les matériaux broyés à sec.

En ce qui concerne les amines, il a été noté qu'outre le fait qu'elles modifient la résistivité électrique du produit final dans lequel on retrouve le matériau broyé à sec, de tels agents d'aide au broyage à sec peuvent se comporter comme des agents complexant au niveau des applications finales dans lesquelles ils peuvent être employés, et notamment par rapport aux composés à base de cobalt employés pendant la fabrication de polyesters, qui rendent difficile le contrôle de la réactivité dudit polyester. De plus, dans le cas des amines primaires et secondaires, on peut observer la formation d'amines azotées.

Les bases de Lewis constituent le troisième groupe d'agents d'aide au broyage à sec, et contiennent notamment les alcools. De tels alcools sont notamment les éthylène glycols, diéthylène glycols, triéthylène glycols, propylène glycols et dipropylène glycols. Par exemple, les documents WO 2002/081 573 et US 2003/019 399 décrivent l'utilisation de diéthylène glycol comme agent d'aide au broyage à sec dans le tableau 1 de chacun de ces documents.

Le document WO 2005/071 003 décrit un coeur de carbonate de calcium au moins partiellement recouvert par une couche ajoutée au moyen de deux étapes consécutives distinctes de traitement, chaque étape mettant en oeuvre un traitement différent. L'objectif de cette invention est de fournir des particules de carbonate de calcium ayant une dispersibilité améliorée et une tendance à l'agglomération réduite. Cette invention fait référence de manière générale à un alcool polyhydrique, correspondant à l'éthylène glycol, qui constitue le premier et / ou le second agent de traitement. Une brève mention est faite que cet agent de traitement peut être introduit au cours d'un procédé de broyage, sans qu'aucun aspect dudit procédé ne soit décrit ni exemplifié.

Certains de ces additifs sont ajoutés en vue d'améliorer la compatibilité des matériaux broyés dans l'application finale.

A cette fin, l'homme du métier connaît le document WO 2005/026 252 qui décrit une charge modifiée en surface comprenant des charges particulaires, qui peuvent, parmi d'autres alternatives, être du carbonate de calcium, où les surfaces de cette charge sont modifiées avec une pluralité de groupement hydroxyles. De telles charges sont rendues compatibles et dispersables dans des résines polymériques. Dans le cas où ladite charge est un carbonate de calcium naturel, le document indique que ledit carbonate de calcium naturel est préférablement modifié par broyage à sec en l'absence d'espèces chimiques hygroscopiques ou hydrophiles. L'agent d'aide au broyage à sec peut être une triéthanolamine, un polypropylène ou un éthylène glycol.

En fait, les agents d'aide au broyage du type mono- ou pluri glycol, de poids moléculaire généralement inférieur à 300 g/mole, sont fréquemment utilisés dans l'industrie et présentent de nombreux avantages parmi lesquels leur faible coût.

Cependant, au sujet de ce type d'agents d'aide au broyage, il a été remarqué que les produits de décomposition résultant du broyage à sec de matériaux contenant un minerai carbonaté, et notamment CaO et Ca(OH)₂ dont la Demanderesse estime qu'ils se forment à la surface du matériau carbonaté, peuvent réagir avec les glycols couramment utilisés dans l'industrie ce qui cause un jaunissement inacceptable du produit broyé. Cette observation a été confirmée dans la partie relative aux exemples de la présente Demande. En particulier, ce jaunissement a été relevé dans le cas de l'éthylène glycol, et à plus large degré dans les cas des mono-, di- et triéthylène glycols, et du monopropylène glycol.

En vue d'utiliser ces mono glycols et ces glycols oligomériques, l'homme du métier doit faire face au problème suivant : diminuer la taille de particules d'un matériau contenant un minerai carbonaté par un procédé de broyage à sec, sans causer le jaunissement du produit broyé.

En outre, recherchant une solution du type glycol résolvant le problème évoqué ci-dessus, l'homme du métier doit trouver un agent d'aide au broyage à sec efficace pour ledit broyage (en terme de capacité de production et éventuellement en terme d'énergie de broyage), parmi les solutions à base de glycol proposées par l'art antérieur, et éventuellement parmi les autres solutions traditionnelles mais sans glycol.

De plus, cette solution ne doit par avoir recours à des quantités d'agent d'aide au broyage qui pourraient altérer substantiellement les propriétés du matériau broyé, de même que les propriétés du produit final contenant ledit matériau broyé.

Enfin, l'homme du métier reste conscient des problèmes environnementaux, et recherche à minimiser les polluants potentiels qui résultent des matériaux introduits dans toute unité industrielle de broyage.

En réponse à ces questions, la Demanderesse a mis au point un procédé qui résout de manière surprenante l'ensemble des problèmes mentionnés plus haut.

Il s'agit d'un procédé de broyage à sec d'un matériau contenant un minerai carbonaté, caractérisé en ce que ledit procédé comprend les étapes de :
a) broyer à sec ledit matériau dans au moins une unité de broyage :
   (i) en présence d'au moins un polymère polyalkylène glycol où 90 % au moins, préférentiellement 95 % au moins, très préférentiellement 98 % au moins des unités monomères formant le squelette dudit polymère sont constitués d'oxyde d'éthylène, d'oxyde de propylène, ou leurs mélanges, et dont le poids moléculaire est au moins égal à 400 g/mole,
   (ii) de telle manière à ce que la quantité d'eau dans ladite unité de broyage est inférieure à 10 % en poids sec dudit matériau dans ladite unité de broyage ;
b) éventuellement classifier le matériau broyé à sec selon l'étape a) avec au moins une unité de classification ;
c) éventuellement répéter lés étapes a) et / ou b) sur tout ou partie du matériau broyé issu de l'étape a) et / ou b).

De tels polymères polyalkylène glycol selon l'étape a) du procédé de l'invention sont préparés par réaction de polymérisation conduisant à peu ou aucune estérification, généralement par polymérisation de monomères à base d'époxydes, où les deux atomes de carbone constitutifs du cycle époxyde éther ne contiennent que des atomes d'hydrogène et / ou un simple groupe méthyle.

Alors que de tels polymères polyalkylène glycol sont bien connus dans diverses industries comme, entre autres, agents de démoulage pour les caoutchoucs, agents adoucissants ou de récurage pour les textiles, agents adoucissants dans l'industrie papetière, agents anti corrosion pour l'industrie des métaux, ils n'ont jamais été décrits comme agents d'aide au broyage à sec de matériaux contenant un minerai carbonaté.

Dans le résumé du document "Characterisation of the mechanical grinding of water-cooled blast-furnace slags by means of x-ray diffraction" (Tohoku Daiguku Senko Seiren Kenkyusho Iho (1989), 45(2)), le broyage de laitiers de hauts fourneaux est décrit à partir, entre autres, de polyéthylène glycols, sans que la nature de l'opération de broyage soit précisée. Même si le carbonate de calcium est mentionné comme faisant partie des structures présentes dans les laitiers, cette indication n'est d'aucune aide pour l'homme du métier puisque tout laitier de hauts fourneaux chauffé à plus de 850 °C contient généralement les oxydes correspondant, comme l'oxyde de calcium, ou de silicate, le silicate de calcium.

Au regard des procédés connus portant sur des matériaux à base de minéraux et sur un polymère glycol ayant un poids moléculaire relativement élevé, l'homme du métier connaît le document US 2002/0004541, qui décrit des polymères blocs surfactants à base d'oxyde d'éthylène et d'oxyde de propylène, ainsi qu'un procédé pour leur préparation. L'objet de l'invention décrit dans ce document qui demeure, une fois encore en dehors de l'objet de la présente Demande, est atteint par la combinaison entre ce copolymère glycol de bas poids moléculaire, de l'eau et un dialkyl sulfosuccinate. Il est indiqué dans ce document ([0013]) que de tels polymères blocs peuvent être utilisés comme agents d'aide au broyage, même si aucune indication n'est fournie sur la nature des matériaux à broyer, ni sur la nature du broyage (sec ou humide), ni sur l'efficacité dudit procédé de broyage.

En fait, eu égard au précédent document qui enseigne qu'il vaut mieux éviter les formes solides ou les cires des polymères blocs d'oxyde d'éthylène et d'oxyde de propylène, la Demanderesse a trouvé de manière surprenante que le procédé selon la présente invention fonctionnait aussi en présence de polymères polyalkylène glycol identifiés dans les revendications comme étant présents à l'état solide ou à l'état de cires.

Enfin, le document US 2005/0107493 décrit une méthode pour produire des particules inorganiques solides fines, traitées, la surface de ces particules étant traitée par de fines particules inorganiques solides, tels que des carbonates, et contenant au moins deux additifs organiques différents. Il est indiqué que le second additif peut être un polyéthylène glycol, sans qu'il soit fait mention de son poids moléculaire. Il est possible d'induire la modification, qui peut avoir lieu pendant une étape de broyage ([0017]), avec ou sans eau. Toutefois, aucune indication n'est fournie sur la fonction potentielle d'agent d'aide au broyage remplie par le glycol, ni sur l'efficacité d'un tel broyage, ni sur le fait qu'il s'agisse d'un broyage à sec décrit ou exemplifié en quelques détails. En outre, le but de cette invention est complètement différent de celui visé par la présente Demande, puisqu'il s'agit d'obtenir un matériau aggloméré présentant une distribution uniforme des additifs sur sa surface.

Ainsi, aucun des documents de l'art antérieur ne concerne le problème suivant que doit résoudre l'homme du métier : réaliser le broyage et la division d'un minerai carbonaté à travers un procédé de broyage à sec et ce, sans conduire à un produit ayant un jaunissement trop important.

Plus particulièrement, la résolution de ce problème, en combinaison avec les autres exigences de l'homme du métier, n'est décrit dans aucun des documents de l'art antérieur ni leurs possibles combinaisons :
- fournir un procédé de broyage efficace (en terme de capacité de production et d'énergie de broyage requise) et ce, particulièrement par rapport aux solutions de l'art antérieur à base de glycol, et éventuellement aussi par rapport aux autres solutions traditionnelles sans glycol,
- éviter d'avoir recours à des quantités d'agents d'aide au broyage qui pourraient altérer les propriétés du produit final, afin de réaliser un broyage efficace,
- éviter d'avoir recours à un agent d'aide au broyage qui se comporte comme un complexant pendant la fabrication des polyesters, rendant de ce fait difficile le contrôle de la vitesse de réaction,
- fournir un agent d'aide au broyage qui conduira à une quantité réduite de composés organiques volatiles (COV) dans le produit broyé et ce, pour prendre en compte les obligations relatives à la pollution de l'air.

Au regard de cette dernière exigence, il faut noter que même avec de faibles pressions de vapeur de l'ordre de 10⁻² mm de Hg et avec des points d'ébullition de l'ordre de 250 °C ou plus, la plupart des glycols utilisés dans l'art antérieur comme agents d'aide au broyage à sec peuvent s'évaporer entièrement, même à des faibles températures de l'ordre de 45 °C et ce, pendant une période de 16 heures environ.

La Demanderesse tient aussi à souligner que si certains poly glycols sont utilisés comme agents d'aide au broyage à sec, de tels agents sont mis en oeuvre pour le broyage de matériaux non carbonatés et notamment dans le domaine des céramiques et dans l'industrie des métaux.

L'homme du métier n'avait pas de raisons objectives de rechercher une solution à son problème technique dans de tels domaines et, même s'il l'avait fait, il n'aurait pas trouvé de document traitant du même problème technique ou d'un problème technique similaire à celui qu'il cherche ici à résoudre.

Par exemple, le document JP 10-245581 décrit l'utilisation de copolymères d'esters d'oxyde de polyéthylène et d'oxyde de polypropylène avec un acide carboxylique, pour obtenir une huile ayant des propriétés améliorées telles que la résistance à la rouille et à la formation de mousse, quand elle est utilisée pour la découpe des métaux, leur broyage, ce qui n'a trait qu'au seul contexte des procédés de fabrication des métaux. De même, le document JP 10-24582 concerne la même invention mais fait référence à des éthers.

La page internet http://www.surfactant.co.kr/surfactants/peg.html fait référence à des glycols utilisés uniquement dans le cadre du broyage de métaux.

Le document WO 84/01 372 décrit une méthode pour préparer des matériaux céramiques Si3N4 où le produit Carbowax^{™} (qui est un polyéthylène glycol) peut être utilisé pour broyer à sec ces matériaux.

Husemann et al., dans le document "Enhancing the effetiveness of dry ultrafine grinding and classifying processes by addition of surfactants"(Aufbereitungs-Technik 35 (1994) Nr. 8), s'intéressent au besoin pour réaliser une production efficace de particules ultrafines, tout particulièrement dans le cas de matériaux extrêmement durs. Ces auteurs indiquent que le polyéthylène glycol constitue un agent d'aide au broyage intéressant pour SiC, notamment pour éviter la formation d'agglomérats.

Le résumé du document CS 181 565 fait référence au broyage à sec de dioxyde de titane par ajout de polyéhthylène glycol d'un poids moléculaire non défini, en vue d'augmenter la capacité de broyage et pour améliorer la dispersibilité du dioxyde de titane dans des liants organiques.

Enfin, Fukimori et al. dans le document "Dry grinding chitosan powder by a planetary ball mill" (Advanced Powder Technol., Vol. 9, No 4 (1998)) décrivent le broyage à sec de polysaccharide chitosan avec un polyéthylène glycol de poids moléculaire égal à 4 000 g/mole.

Aussi, aucun des documents de l'état de la technique, ni aucune de leurs combinaisons, ne concerne le problème résolu par la présente invention, c'est-à-dire le broyage de matériaux contenant un minerai carbonaté, à travers un procédé de broyage à sec et ce, sans provoquer le jaunissement du produit broyé.

Comme indiqué auparavant, un premier objet de l'invention consiste en un procédé de broyage à sec d'un matériau contenant un minerai carbonaté, caractérisé en ce que ledit procédé comprend les étapes de :
a) broyer à sec ledit matériau dans au moins une unité de broyage :
   (i) en présence d'au moins un polymère polyalkylène glycol où 90 % au moins, préférentiellement 95 % au moins, très préférentiellement 98 % au moins des unités monomères formant le squelette dudit polymère sont constitués d'oxyde d'éthylène, d'oxyde de propylène, ou leurs mélanges, et dont le poids moléculaire est au moins égal à 400 g/mole,
   (ii) de telle manière à ce que la quantité d'eau dans ladite unité de broyage est inférieure à 10 % en poids sec dudit matériau dans ladite unité de broyage ;
b) éventuellement classifier le matériau broyé à sec selon l'étape a) avec au moins une unité de classification ;
c) éventuellement répéter les étapes a) et / ou b) sur tout ou partie du matériau broyé issu de l'étape a) et / ou b).

Comme indiqué précédemment, de tels polymères polyalkylène glycol selon l'étape a) du procédé de la présente invention sont préparés par réaction de polymérisation conduisant à peu ou aucune estérification, généralement par polymérisation de monomères à base d'époxydes où les deux atomes de carbone constitutifs du cycle époxyde éther ne contiennent que des atomes d'hydrogène et / ou un simple groupe méthyle.

Les éléments additionnels à hauteur de moins de 10 %, préférentiellement moins de 5 %, très préférentiellement moins de 2 % formant le reste du squelette du polymère et qui ne sont pas des oxydes d'éthylène, des oxydes de propylène ou leurs mélanges, sont des contaminants qui n'inhibent pas l'activité du polymère polyalkylène glycol comme agent d'aide au broyage à sec. De telles impuretés peuvent être, par exemple, introduites durant la synthèse de tels polymères, et peuvent résulter de l'incorporation de monomères à base d'époxyde où les 2 atomes de carbone constitutifs du cycle éther époxyde contiennent contenant au moins un groupement alkyle.

Dans le procédé selon l'invention, il est préférable que la teneur en eau dans l'unité de broyage soit inférieure à 2 % en poids, préférentiellement inférieure à 0,5 % en poids, par rapport au poids sec total du matériau à broyer dans ladite unité de broyage. Cette teneur en eau est déterminée par la perte de poids observée lorsque le matériau broyé dans l'unité de broyage est chauffé dans une étuve à 120 °C jusqu'à ce qu'un poids constant soit obtenu ; la perte en poids exprimé en pourcentage du poids de départ du matériau original indique la teneur en eau.

Au regard du polymère polyalkylène glycol mis en oeuvre au cours de l'étape a) du procédé, l'invention est aussi caractérisée en ce que ledit polymère présente un poids moléculaire (Mw) de moins de 9 500 g/mole.

En ce qui concerne la présente invention, tous les poids moléculaires (Mw) correspondent aux poids moléculaires moyens déterminés à partir de la distribution en poids moléculaire dudit polymère. Cette distribution est déterminée selon la référence 118 "OECD Guideline for Testing of Chemicals: Determination of Number-Average Molecular Weight and the Molecular Weight Distribution of Polymers using Gel Permeation Chromatography" adoptée le 14.06.96, dans l'eau, en utilisant comme étalons les polyéthylènes glycols DIN standards disponibles auprès de la société Polymer Standards Service GmbH à Mayence, Allemagne, sous les noms : PSS-dpeg400, PSS-dpeg600, PSS-dpeg1k, PSS-dpeg1.5k, PSS-dpeg2k, PSS-dpeg3k, PSS-dpeg4k, PSS-dpeg6k et PSS-dpeg10k.

En ce qui concerne la quantité de polymère polyalkylène glycol employé dans la présente invention, cette quantité doit être déterminée par l'homme du métier en fonction de l'objectif final en terme de taille de particules. Toutefois, il peut être avantageux de mettre en oeuvre de 0,01 à 0,5 % en poids sec, préférentiellement de 0,03 à 0,25 % en poids sec dudit polymère, par rapport au poids sec du matériau contenant un minerai carbonaté dans chaque unité de broyage.

Selon une autre variante, le procédé selon la présente invention peut être conduit de telle manière à ce que la quantité de polymère polyalkylène glycol mise en oeuvre dans chaque unité de broyage soit comprise entre 0,1 et 1 mg dudit polymère par m² de matériau contenant un minerai carbonaté, et préférentiellement comprise entre 0,2 et 0,6 mg dudit polymère par m² de matériau contenant un minerai carbonaté. La surface à laquelle la Demanderesse fait ici référence, en ce qui concerne le matériau contenant un minerai carbonaté, est sa surface spécifique mesurée selon la méthode BET, en accord avec la technique bien connue de l'homme du métier (norme ISO 9277).

De manière additionnelle, il peut être intéressant d'employer un polymère polyalkylène glycol caractérisé en ce que, lorsqu'il est soumis à une température de 45 °C pendant une période de 16 heures, plus de 75 %, préférentiellement plus de 90 % de 50 mg dudit polymère mis dans 50 ml d'eau, ne sont pas volatilisés.

Selon une première variante, une première catégorie de polymères polyalkylène glycol mis en oeuvre selon l'invention sont des polymères du type polyéthylène glycol. Ce premier groupe est caractérisé en ce qu'il consiste en des polymères du type polyéthylène glycol contenant une fraction de monomères oxyde d'éthylène supérieure à 95 %, préférentiellement supérieure à 98 % du total des monomères. Dans ce cas, les polymères du type polyéthylène glycol présentent un poids moléculaire compris entre 500 et 10 000 g/mole, préférentiellement entre 600 et 1 500 g/mole, très préférentiellement entre 600 et 1 000 g/mole.

Selon une deuxième variante, une deuxième catégorie de polymères polyalkylène glycol mis en oeuvre selon l'invention sont des polymères du type polypropylène glycol. Ce deuxième groupe est caractérisé en ce qu'il consiste en des polymères du type polypropylène glycol contenant une fraction de monomères oxyde de propylène supérieure à 95 %, préférentiellement supérieure à 98 % du total des monomères. Dans ce cas, les polymères du type polypropylène glycol présentent un poids moléculaire compris entre 500 et 6 000 g/mole, préférentiellement entre 2 000 et 3 000 g/mole.

Selon une troisième variante, un troisième groupe de polymères polyalkylène glycol peut être mis en oeuvre et consiste en des copolymères d'oxyde d'éthylène et d'oxyde de propylène. Ils présentent un ratio monomères d'oxyde d'éthylène : oxyde de propylène compris entre 1:5 et 5:1, ce ratio étant préférentiellement égal à 3:2. ils présentent également un poids moléculaire compris entre 1 000 et 5 000 g/mole, préférentiellement entre 2 000 et 3 000 g/mole.

A l'intérieur de ce troisième groupe, on distingue les copolymères bloc qui contiennent au moins un bloc d'homopolymère du polyéthylène glycol et / ou du polypropylène glycol, correspondant à au moins 20 %, préférentiellement au moins 30 %, très préférentiellement au moins 40 % du total des unités monomères oxyde d'éthylène et oxydes de propylène.

De plus, ces copolymères bloc peuvent être des polymères tri-blocs : ils comprennent 3 blocs d'homopolymère du polyéthylène glycol et / ou du polypropylène glycol.

Ces unités polymères tri blocs peuvent être telles que le bloc de l'homopolymère du polyéthylène glycol (PEG) est situé entre deux blocs d'homopolymères du polypropylène glycol (PPG); ces unités tri-blocs sont alors référencées comme des polymères du type PPG/PEG/PPG.

Selon une autre variante, ces unités polymères tri blocs peuvent être telles que le bloc de l'homopolymère du polypropylène glycol est situé entre deux blocs d'homopolymères du polyéthylène glycol ; ces unités tri-blocs sont alors référencées comme des polymères du type PEG/PPG/PEG.

Ces diverses formes des polymères polyalkylène glycol selon le procédé de la présente invention peuvent être mélangés entre elles de manière à former un mélange de polymères polyalkylène glycol utilisables dans l'étape a) du procédé de la présente invention. Dans ce cas, il est préférable que de tels mélanges comprennent au moins 2 polymères du type polyéthylène glycol, au moins un polymère du type polypropylène glycol, et au moins un polymère du type copolymère bloc. Il peut être aussi avantageux que ce mélange comprenne spécifiquement au moins 2 polymères du type polyéthylène glycol, au moins un polymère du type polypropylène glycol, et au moins un polymère du type copolymère bloc, dans un ratio oxyde d'éthylène:oxyde de propylène compris entre 90:10 et 10:90.

Les diverses formes des polymères polyalkylène glycol mis en oeuvre dans le procédé de la présente invention peuvent être aussi mélangées avec des agents qui ne sont pas du type polyalkylène glycol dans l'étape a) du procédé. Dans ce cas, il est préférable que ledit polymère polyalkylène glycol représente au moins 50 % en poids, préférentiellement au moins 85 % en poids, et très préférentiellement au moins 95 % en poids, du poids total constitué par le polymère polyalkylène glycol et des agents qui ne sont pas du type polyalkylène glycol.

Dans une variante particulière de la présente invention, l'agent qui n'est pas du type polyalkylène glycol est un carbohydrate, la tri isopropyl amine (TIPA), ou leurs mélanges. Ladite TIPA peut être utilisée avantageusement en combinaison avec un polymère polyéthylène glycol de poids moléculaire compris entre 600 et 1 000 g/mole, et dans un ratio TIPA:polyéthylène glycol polymère égal à 80:20. Ledit carbohydrate peut être un sucrose, un sorbitol, ou leurs mélanges.

Le procédé selon la présente invention peut être particulièrement mis en oeuvre pour des matériaux contenant un minerai carbonaté contenant au moins 80 %, préférentiellement au moins 90 % de minerai carbonaté par rapport au poids dudit matériau. Ce minerai carbonaté est un produit naturel ou synthétique, et est notamment de la dolomie, du carbonate de calcium ou leurs mélanges.

En ce qui concerne le carbonate de calcium, il peut s'agir de calcaire, de marbre, de craie, d'un carbonate de calcium précipité ou de leurs mélanges, et plus préférentiellement de calcaire, de marbre ou de leurs mélanges.

La partie non carbonatée du matériau à broyer peut consister en une argile, un silicate non argileux, une silice, ou leurs mélanges. De manière préférentielle, cette argile peut être une bentonite, un kaolin, une argile calcinée ou leurs mélanges, et ce silicate non argileux est un talc, un mica ou leurs mélanges.

Selon un autre aspect, le procédé de la présente invention est aussi caractérisé en ce que le matériau contenant un minerai carbonaté présente un diamètre d₉₅ (95 % en poids des particules ont un diamètre inférieur à cette valeur, telle que mesurée à partir d'un granulomètre Malvern^{™} Mastersizer^{™} S version 2.8) avant l'étape a) inférieur ou égal à 30 mm, préférentiellement inférieur ou égal à 5 mm, et très préférentiellement inférieur ou égal à 2 mm.
Plus particulièrement, le procédé selon la présente invention est aussi caractérisé en ce que le matériau contenant un minerai carbonaté présente un diamètre médian avant l'étape a) compris entre 0,2 et 0,7 mm et préférentiellement compris entre 0,4 et 0,5 mm, tel que mesuré en utilisant des tamis.

Le procédé selon l'invention est aussi caractérisé en ce qu'il est un procédé continu.

Selon ce procédé, le polymère polyalkylène glycol peut être ajouté au matériau contenant le minerai carbonaté avant l'étape a), et préférentiellement avant toute étape a) du procédé selon l'invention.

En ce qui concerne les unités de broyage mises en oeuvre au cours de l'étape a), elles peuvent consister en au moins un broyeur à roue et / ou au moins un broyeur à boulets et/ou au moins un broyeur à broches comprenant des billes de broyage. En ce qui concerne lesdites unités, il peut être avantageux de mettre en oeuvre une vitesse périphérique comprise entre 5 et 60 m/s, préférentiellement entre 20 et 40 m/s.

Dans le cas d'un broyeur à boulets, les billes de broyage qui y sont présentes ont une dureté Brinell comprise entre 510 et 600. Préférentiellement, elles sont constituées de fer, tels que des alliages à base de fer avec du molybdène ou du chrome, de la porcelaine et / ou des silicates, et elles présentent un diamètre moyen de billes compris entre 5 et 50 mm, préférentiellement entre 15 et 25 mm. Dans un aspect préféré de la présente invention, ces billes de broyage présentent un rapport d'aspect (rapport longueur/ diamètre) compris entre 1/3 et 3/1. Dans certains cas, il peut être avantageux d'utiliser un mélange de billes de broyage de différents diamètres et présentant une distribution bimodale des diamètres médians.

Selon un autre aspect préféré, ces billes de broyage sont présentes dans un ratio volumique par rapport au matériau à broyer contenu dans le broyeur à boulet compris entre 1,8:1 et 3,6:1, et préférentiellement en ce que ce ratio est égal à 2,5:1.

L'étape a) de broyage à sec du procédé selon la présente invention peut aussi être suivi par une ou plusieurs étapes de classification b), au moins une étape de classification b) ayant lieu.

Dans le cas où 2 étapes de classification au moins ont lieu avant toute étape ultérieure a), l'une ou l'autre de ces 2 étapes peut avoir lieu en série ou en parallèle.

Cette classification peut avoir notamment lieu dans un classificateur de type cyclone et / ou de type rotor. Il est alors préférable que le flux ascendant du gaz de transport de cette unité de classification présente une vitesse comprise entre 3 et 15 m/s, préférentiellement entre 8 et 12 m/s.

Dans certains cas, il peut être avantageux de faire re circuler une partie du matériau issu de l'étape de classification b) jusqu'à l'étape a) pour un broyage additionnel. C'est notamment le cas pour les particules classifiées ayant un diamètre équivalent sphérique situé en dehors de la gamme requise pour les matériaux broyés de la présente invention dits "matériaux valorisables". Les matériaux broyés valorisables selon la présente invention présentent un diamètre sphérique équivalent compris entre 0,7 et 150 µm, préférentiellement compris entre 1 et 45 µm, très préférentiellement compris entre 2 et 5 µm.

Dans le cas où les matériaux broyés valorisables sont extraits à la suite de l'étape de classification et où les matériaux restants sont ré introduits au niveau de l'étape a), il peut être intéressant de rajouter une quantité fraîche de matériau contenant un minerai carbonaté au niveau de l'étape a), en vue de maintenir un poids constant de matériau dans l'unité de broyage.

Un autre objet de l'invention consiste aussi dans les produits caractérisés en ce qu'ils sont obtenus par le procédé selon la présente invention.

Ces produits sont aussi caractérisés en ce que les polymères polyalkylène glycol sont détectés par des méthodes à base de Chromatographie en phase gel (GPC)
ou par Chromatographie Liquide Haute Pression (HPLC), selon des protocoles bien connus de l'homme du métier.

Enfin, un autre objet de la présente invention consiste en les produits obtenus par le procédé selon la présente invention, dans les domaines des mastics, des plastiques, du papier, de la peinture, et des applications pour l'agriculture.

Ledit plastique est un PVC plastifié ou non, un plastique polyéthylène, un plastique polypropylène ou leurs mélanges.

Ledit mastic comprend les silicones, les polysulfures et leurs mélanges.

Enfin, les produits selon la présente invention peuvent aussi servir de matériaux d'alimentation pour un procédé de broyage ultérieur en voie humide ; ce broyage humide ultérieur peut avoir lieu en présence ou non d'agents dispersants.

### EXEMPLES

Les exemples suivants sont non limitatifs et sont ici dans le but d'illustrer certains aspects de la présente invention, et ils ne sauraient en rien limiter la portée de la présente invention.

### Procédure expérimentale exemplifiant un procédé mettant en oeuvre un broyeur à boulets

Dans les exemples 1 à 6, le broyage à sec est réalisé de manière continue, dans un broyeur à boulets "Hosokawa^{™} Ball Mill S.O. 80/32" commercialisé par la société HOSOKAWA^{™}, équipé d'un classificateur Alpine Turboplex^{™} 100 ATP commercialisé par la société ALPINE^{™}.
La sortie de la chambre de broyage est équipée d'une ouverture de taille 20 x 6 mm.
Le classificateur est réglé à 300 m³/heure alors que sa vitesse de rotation et la vitesse de l'air sont réglées de manière à obtenir un matériau broyé présentant un diamètre inférieur ou égal à une valeur donnée (le matériau ainsi broyé est appelé matériau broyé valorisable) ; les matériaux broyés restants de diamètre supérieur à cette valeur sont ré introduits dans l'alimentation du broyeur.

Tous les broyages sont réalisés en utilisant 100 kg de billes de broyage en fer Cylpeb^{™}, en forme de tonneau, ayant un diamètre moyen de 25 mm.
Le broyage est réalisé de telle manière à ce que 15 kg du matériau à broyer soit constamment présent dans le système. Ainsi, l'alimentation est continuellement alimentée avec la quantité de matériau frais correspondant à la quantité de matériau broyé valorisable et qui sort du système et ce, de manière à maintenir 15 kg de matériau dans le système.

Après le démarrage du système et avant d'enregistrer les résultats qui sont indiqués ci-dessous, on a fait fonctionner le système jusqu'à obtenir des valeurs stables pour la quantité de matériau broyé valorisable, la capacité de broyage et l'énergie de broyage.

### Agents d'aide au broyage

Les agents d'aide au broyage référencés PEG consistent en des polymères constitués à 100 % d'unités monomères oxyde d'éthylène terminés par des groupements -OH.

Les agents d'aide au broyage référencés PPG consistent en des polymères constitués à 100 % d'unités monomères oxyde de propylène terminés par des groupements -OH.

Les agents d'aide au broyage référencés PO/EO/PO consistent en des copolymères tri blocs présentant une unité bloc d'oxyde d'éthylène située entre deux blocs d'oxyde de propylène, et sont commercialisés sous le nom Pluronic RPE 1740 par la société BASF. Ces copolymères présentent un poids moléculaire de 2 830 g/mole, les monomères oxyde d'éthylène intervenant pour 1 130 g/mole et les monomères oxyde de propylène intervenant pour 1 700 g/mole du polymère.

Les agents d'aide au broyage référencés MPG consiste en 1,2-propanediol, et ont été obtenus auprès de la société FLUKA^{™}.

Les agents d'aide au broyage référencés EG consiste en éthylène glycol, et ont été obtenus auprès de la société FLUKA^{™}.

Les agents d'aide au broyage référencés DEG consiste en diéthylène glycol, et ont été obtenus auprès de la société FLUKA^{™}.

### Méthodes de mesure

A l'exception du matériau d'alimentation, qui a été mesuré avec des tamis, tous les diamètres médian de particules ont été déterminés avec un appareil Mastersizer^{™} S version 8 commercialisé par la société MALVERN^{™}.
La valeur dx correspond au diamètre de particule pour lequel une fraction x de particules possède un diamètre inférieur à cette valeur.

### Exemple 1

Cet exemple illustre l'instabilité partielle du marbre lorsqu'il est soumis à une force tel que pendant le procédé de broyage.
L'équation chimique suivante est proposée, afin de représenter cette décomposition :

CaCO₃ → CaO + CO₂

50 g de marbre italien correspondant à l'exemple 5 ont été broyés pendant 10 minutes dans un broyeur pour grains de café disponible dans le commerce, équipé d'un couteau rotatif tournant de 30 mm de diamètre.
Une pâte est ensuite produite par ajout au produit blanc broyé de 50 ml de solution incolore 1 molaire de AgSO₄ et 1 molaire de MnSO₄.
On observe que la pâte tourne à une coloration grise sur sa surface, attestant du fait que la réaction entre les cations argent et manganèse avec les ions OH⁻ de l'hydroxide de calcium provenant de la chaux résultant de la réaction de décomposition de CaCO₃.

### Exemple 2

Cet exemple illustre le jaunissement résultant de la réaction entre les produits de décomposition du carbonate broyé et une sélection d'agents d'aide au broyage à sec.

Dans chacun des essais, 5 g de CaO ont été dispersés dans des glycols incolores tels qu'indiqués dans le tableau 1, et stockés à 23 °C dans une étuve pendant 5 jours.

**Tableau 1**

| **Agent d'aide au broyage à sec** | **Couleur de la phase liquide 1 heure après l'addition de CaO** | **Couleur de la phase liquide 5 heures après l'addition de CaO** |
|---|---|---|
| **Selon l'art antérieur** | | |
| EG | jaune | Marron à noir Jaune |
| DEG | jaune | à rouge |
| **Selon l'invention** | | |
| PO/EO/PO | incolore | incolore |
| PEG (poids moléculaire = g/mol) | incolore | incolore |
| PPG (poids moléculaire = 400 g/mol) | incolore | incolore |

### Exemple 3

Cet exemple illustre la capacité de broyage améliorée dans un procédé selon la présente invention, par rapport à un procédé ne mettant pas en oeuvre d'agent d'aide au broyage à sec, et dans le cas du broyage d'un marbre australien.
Avant le broyage, le marbre de diamètre médian de 1 à 10 cm a été préalablement broyé dans un broyeur à marteau.
La distribution de tailles de particules à l'alimentation du broyeur, et telle qu'analysée par tamisage sur différents tamis, est donnée dans le tableau 2.

**Tableau 2**

| **Fraction de particules dont le diamètre est :** | **%** |
|---|---|
| > 1 mm | 17.20 |
| 500µm - 1mm | 16.50 |
| 200-500 µm | 18.80 |
| 100-200 µm | 12.80 |
| 50-100 µm | 16.30 |
| < 50 µm | 18.40 |

Ce marbre a été introduit dans la section de broyage du système en vue d'obtenir un matériau broyé ayant un diamètre médian égal à 2,5 µm et avec un débit d'air de 300 m³/heure.
Les agents d'aide au broyage à sec ont été introduits dans le système de broyage de manière à maintenir une quantité constante d'agents d'aide au broyage par rapport au matériau à broyer.

**Tableau 3**

| **Essai** | **Type d'agent d'aide au broyage** | **Agent d'aide au broyage** **(poids moléculaire g/mol)** | **Quantité d'agent d'aide au broyage** **(ppm)** | **Vitesse de rotation du classificateur** **(rpm)** | **Produit broyé** **d₅₀ (µm)** | **Capacité de broyage** **(kg/h)** |
|---|---|---|---|---|---|---|
| **Selon l'invention** | | | | | | |
| A | PEG | 600 | 2000 | 7000 | 2.6 | 10.6 |
| B | PEG | 800 | 2 000 | 7 500 | 2.5 | 8.8 |
| C | PEG | 800 | 4000 | 7 500 | 2.6 | 9.8 |
| D | PEG | 1000 | 2000 | 8000 | 2.5 | 7.4 |
| E | PPG | 400 | 2000 | 7000 | 2.5 | 9.0 |
| F | PPG | 4 000 | 2 000 | 7 000 | 2.5 | 11.0 |
| **Selon l'art antérieur** | | | | | | |
| G | aucun | -- | Aucun | 8 000 | 2.5 | 0.5 |

Les résultats du tableau 3 démontrent clairement que la capacité de broyage est améliorée dans le cadre de l'invention.

### Exemple 4

L'essai D de l'exemple 3 a été reproduit 4 fois, en mettant en oeuvre 2 000 ppm d'agent d'aide au broyage et une vitesse de rotation du classificateur égale à 7 500 tours par minute, en vue de démontrer la reproductibilité de tels résultats.

**Tableau 4**

| **Essai** | **Produit broyé** **d₅₀ (µm)** | **Capacité de broyage** **(kg/h)** |
|---|---|---|
| D1 | 2.50 | 8.5 |
| D2 | 2.41 | 9.1 |
| D3 | 2.75 | 8.1 |
| D4 | 2.36 | 9.9 |

### Exemple 5

Cet exemple illustre l'amélioration de la capacité de broyage d'un marbre italien, dans le cas du procédé de l'invention, par rapport à un procédé de broyage mettent en oeuvre des agents d'aide au broyage de l'art antérieur.
Avant le broyage, le marbre de diamètre médian de 1 à 10 cm a été préalablement broyé dans un broyeur à marteau.

La distribution de tailles de particules à l'alimentation du broyeur, et telle qu'analysée par tamisage sur différents tamis, est donnée dans le tableau 2.

**Tableau 5**

| **Fraction de particules dont le diamètre est :** | **%** |
|---|---|
| > 1 mm | 29.90 |
| 500 µm - 1mm | 8.50 |
| 200-500 µm | 17.50 |
| 100-200 µm | 17.70 |
| 50-100 µm | 10.80 |
| < 50 µm | 15.60 |

Ce marbre a été introduit dans la section de broyage du système en vue d'obtenir un matériau broyé ayant un diamètre médian égal à 2,5 µm et avec un débit d'air de 300 m³/heure.

Les agents d'aide au broyage à sec ont été introduits dans le système de broyage de manière à maintenir une quantité constante d'agents d'aide au broyage par rapport au matériau à broyer.

**Tableau 6**

| **Essai** | **Type d'agent d'aide au broyage** | **Agent d'aide au broyage** **(poids moléculaire g/mol)** | **Vitesse de rotation du classificateur** **(rpm)** | **Produit broyé** **d₅₀ (µm)** | **Capacité de broyage** **(kg/h)** |
|---|---|---|---|---|---|
| **Selon l'invention** | | | | | |
| I | Mélange | 1 000 | 7000 | 2.6 | 10.0 |
| J | PO/EO/PO | 500 1000 | 4000 | 5.0 | 14.0 |
| K | PO/EO/PO | | 7 000 | 2.6 | 11.0 |
| **Selon l'art antérieur** | | | | | |
| L | aucun | -- | 7 000 | 2.5 | 1.3 |
| M | MPG | 1 500 | 7 000 | 2.5 | 9.5 |

Le mélange correspondant à l'essai I est un mélange de PEG de poids moléculaire 600 g/mole et de PPG de poids moléculaire 4 000 g/mole, dans un ratio massique PEG:PPG égal à 1:1.

Les résultats du tableau 6 démontrent clairement que le procédé selon l'invention permet d'améliorer la capacité de broyage par rapport à un témoin sans agent d'aide au broyage, et permet d'égaler et / ou d'améliorer cette capacité par rapport à un procédé mettant en oeuvre un agent d'aide au broyage de l'art antérieur.

### Exemple 6

La volatilité de différents agents d'aide au broyage dans différents solvants a été comparée, après stockage pendant 16 heures dans une étuve ventilée à 45 °C.

Dans chacun des essais, 50 mg de l'agent d'aide au broyage indiqué ont été introduits dans un ballon ouvert et mélangés avec 50 ml de solvant avant introduction dans l'étuve.
Le degré de volatilité a été déterminé en mesurant le poids résiduel dans chaque ballon après une période de 16 heures, afin de calculer le pourcentage de perte en poids.

**Tableau 7**

| **Agent d'aide au broyage à sec** | **Volatilité dans l'eau** | **Volatilité dans le méthanol** | **Volatilité dans l'éthanol** |
|---|---|---|---|
| **Selon l'invention** | | | |
| PEG (600 g/mol) | | < 10 % | < 10 % |
| PEG (800 g/mol) | | < 10 % | |
| PEG (1 000 g/mol) | < 10% | < 10% | |
| PPG (400 g/mol) | | < 10% | |
| PO/EO/PO | < 10% | < 10% | < 10% |
| **Selon l'art antérieur** | | | |
| MPG | > 90% | > 90 % | |
| EG | >90% <90% | > 90 % | |
| DEG | | >90% | >90% |

Les résultats du tableau 7 démontrent que les agents d'aide au broyage selon l'art antérieur sont plus volatiles, en raison de leur faible pression de vapeur.

### Procédure expérimentale exemplifiant un procédé mettant en oeuvre un broyeur à broches

Dans les exemples 7 et 8, le broyage à sec est réalisé de manière continue, dans un broyeur à broches de laboratoire de type Kolloplex 160 Z (construit en 1970, avec un diamètre de rotor de 16 cm, sous une vitesse de rotation de 14 000 tours par minute, et contenant 400 broches) de la société HOSOKAWA ALPINE^{™} (Augsburg, DE).

### Agents d'aide au broyage

Les agents d'aide au broyage référencés PEG 6000 consistent en des polymères constitués à plus de 99 % d'unités monomères oxyde d'éthylène terminés par des groupements-OH de poids moléculaire égale à 6 000 g/mol.

Les agents d'aide au broyage référencés MPG consiste en 1,2-propanediol, et ont été obtenus auprès de la société FLUKA^{™}.

Les agents d'aide au broyage référencés EO/PO/EO consistent en des copolymères tri blocs présentant une unité bloc d'oxyde de propylène située entre deux blocs d'oxyde d'éthylène, et sont commercialisés sous le nom Lumiten PT par la société BASF.

Les agents d'aide au broyage référencés fructose (un carbohydrate) ont été obtenus auprès de la société FLUKA^{™}.

### Méthodes de mesure

La taille des particules broyées est déterminée par tamisage pour tous les diamètres supérieurs à 100 µm, et avec un appareil Mastersizer^{™} S version 8 commercialisé par la société MALVERN^{™} (utilisant la méthode de calcul Fraunhofer, 3$$D) pour tous les diamètres inférieurs à 100 µm.

La valeur dₓ correspond au diamètre de particule pour lequel une fraction x de particules possède un diamètre inférieur à cette valeur.

### Exemple 7

Cet exemple compare la capacité de broyage d'un marbre du sud de Tyrole de Meran, en Italie, dans le cas du procédé de l'invention, par rapport à un procédé de broyage mettant en oeuvre des agents d'aide au broyage de l'art antérieur.

Avant le broyage, le marbre de diamètre médian de 1 à 10 cm a été préalablement broyé dans un broyeur à marteau.

La distribution de tailles de particules à l'alimentation du broyeur à broches, et telle qu'analysée par tamisage sur différents tamis, est donnée dans le tableau 8.

**Tableau 8**

| **Fraction de particules dont le diamètre est :** | **%** |
|---|---|
| 2800-5000 µm | 20 +/- 1 |
| 1000-2800 µm | 80+/-1 |
| < 1000 µm | <1 +/- 1 |

2.5 kg de ce marbre a ensuite été mélangé dans un mixeur pendant 2 heures avec l'agent d'aide au broyage à sec, la nature et quantité de ce dernier étant indiquée dans le tableau ci-dessous. Pour les essais R et S, l'agent d'aide au broyage a sec est formé d'une solution aqueuse avec un extrait sec de 20 % massique, de fructose et PEG 6000 présent dans un rapport massique de 1 : 1.

Par la suite, ce mélange a été introduit de manière continue sur une période de 15 minutes dans la section de broyage du broyeur à broches, et broyé en vue d'obtenir un matériau broyé ayant un diamètre médian de 15 µm.

**Tableau 9**

| **Essai** | **N (Art Antérieur)** | **O (Art Antérieur)** | **P (Invention)** | **Q (Invention)** | **R (Invention)** | **S (Invention)** |
|---|---|---|---|---|---|---|
| **Agent d'aide au broyage à sec** | MPG | MPG | PEG 6000 | PEG 6000 | Suspension de PEG 6000/fructo se dans un rapport massique de 1 : 1 | Suspension de PEG 6000/fructo se dans un rapport massique de 1 : 1 |
| **Quantité d'agent d'aide au broyage (ppm)***** | 250 | 500 | 250 | 500 | 500 | 1000 |
| **Caratéristiques du produit broyé** | | | | | | |
| **Fraction de particules dont le diamètre est inférieur à 100 µm** | 99.0 | 98.0 | 99.1 | 99.2 | 98.8 | 98.8 |
| **d₉₀ (µm)** | 44.5 | 39.4 | 39.2 | 37.9 | 36.9 | 36.2 |
| **d₅₀ (µm)** | 17.7 | 15.2 | 15.0 | 14.9 | 14.7 | 13.3 |
| **d₁₀ (µm)** | 2.6 | 2.2 | 2.2 | 2.3 | 2.2 | 1.8 |

| | | | | | | |
|---|---|---|---|---|---|---|
| *** calculé en poids sec par rapport au poids sec du matériau à broyer | | | | | | |

Les résultats du tableau 9 démontrent clairement que selon le procédé de l' invention, l'utilisation de 250 ppm de l'agent d'aide au broyage du procédé inventif (calculé en poids sec sur le poids sec du matériau à broyer) permet d'obtenir un carbonate de calcium broyé présentant des caractéristiques essentiellement équivalent par rapport à un procédé mettant en oeuvre une quantité agent deux fois plus grande d'agent d'aide au broyage de l'art antérieur (essai O et essai P).

### Exemple 8

Cet exemple compare la capacité de broyage de calcaire de la région d'Ulm du sud de l'Allemagne, dans le cas du procédé de l'invention, par rapport à un procédé de broyage mettant en oeuvre des agents d'aide au broyage de l'art antérieur.

Avant le broyage, le calcaire de diamètre médian de 1 à 10 cm a été préalablement broyé dans un broyeur à marteau.

La distribution de tailles de particules à l'alimentation du broyeur, et telle qu'analysée par tamisage sur différents tamis, est donnée dans le tableau 10.

**Tableau 10**

| **Fraction de particules dont le diamètre est :** | **%** |
|---|---|
| 2800-5000 µm | 20 +/- 1 |
| 1000-2800 µm | 80 +/-1 |
| < 1000 µm | <1 +/- 1 |

2.5 kg de ce calcaire a ensuite été mélangé dans un mixeur pendant 2 heures avec l'agent d'aide au broyage à sec, la nature et quantité de ce dernier étant indiquée dans le tableau ci-dessous. Pour les essais T et U, l'agent d'aide au broyage à sec est formé d'une solution aqueuse avec un extrait sec de 50 % massique.

Par la suite, ce mélange a été introduit de manière continue sur une période de 15 minutes dans la section de broyage du broyeur à broches, et par la suite broyé en vue d'obtenir un matériau broyé ayant un diamètre médian de 5 µm.

**Tableau 11**

| **Essai** | **T (Art Antérieur)** | **U (Invention)** |
|---|---|---|
| **Agent d'aide au broyage à sec** | MPG | EO/PO/EO |
| **Quantité** d'agent **d'aide au broyage (ppm)***** | 250 | 250 |
| **Caractéristiques du produit broyé** | | |
| **Fraction de particules dont le diamètre est inférieur à 100 µm** | 66.8 % | 57.4 % |
| **d₉₀ (µm)** | 23.33 | 22.42 |
| **d₅₀ (µm)** | 5.34 | 5.30 |
| **d₁₀ (µm)** | 1.03 | 1.04 |

| | | |
|---|---|---|
| *** calculé en poids sec par rapport au poids sec du matériau à broyer | | |

Les résultats du tableau 11 démontrent que le procédé selon l'invention mènent a un produit de d₅₀ comparable a celui obtenu par un procédé selon l'art antérieur.

### Procédure expérimentale exemplifiant un procédé mettant en oeuvre un broyeur à boulet en porcelaine

Dans l'exemple 9, le broyage à sec est réalisé de manière discontinue, dans un broyeur à boulets de laboratoire "Hosokawa^{™} 1-25LK" commercialisé par la société HOSOKAWA ALPINE^{™} (Augsburg, DE), avec un diamètre de 19.5 cm et une hauteur de 24 cm.

Le broyage est réalisé en utilisant 1 968 g de billes de broyage en porcelaine, dont 21 billes ont un diamètre de 28 mm, 107 un diamètre de 120 mm, 73 un diamètre de 15 mm, et 16 un diamètre de 12 mm.

### Agents d'aide au broyage

Les agents d'aide au broyage référencés PEG 6000 consistent en des polymères constitués à plus de 99 % d'unités monomères oxyde d'éthylène terminés par des groupements -OH de poids moléculaire égale à 6 000 g/mol.

Les agents d'aide au broyage référencés MPG consiste en 1,2-propanediol, et ont été obtenus auprès de la société FLUKA^{™}.

### Méthodes de mesure

La taille des particules broyées est déterminée par tamisage sur différents tamis.

### Exemple 9

Cet exemple illustre l'amélioration de la capacité de broyage de marbre du nord de la Norvège, dans le cas du procédé de l'invention, par rapport à un procédé de broyage mettant en oeuvre des agents d'aide au broyage de l'art antérieur.

L'analyse XRD (D8 Advance de Brucker AXS) effectuée sur ce marbre indique qu'il contient 4,16 % massique d'insolubles-HCl (principalement du quartz, du mica et divers silicates).

Avant le broyage, le marbre de diamètre médian de 1 à 10 cm a été préalablement broyé dans un broyeur à marteau.

La distribution de tailles de particules à l'alimentation du broyeur, et telle qu'analysée par tamisage sur différents tamis, est donnée dans le tableau 12.

**Tableau 12**

| **Fraction de particules dont le diamètre est :** | **%** |
|---|---|
| > 1000 µm | 33.2 |
| <1000 µm | 66.8 |
| < 500 µm | 41.4 |
| < 200 µm | 18.6 |
| < 100 µm | 10.0 |
| < 50 µm | 4.6 |

800 g de ce marbre a été broyé dans le broyeur à billes en porcelaine en présence des agents d'aide au broyage indiquée dans le tableau ci-dessous, sur une période de 24 heures sous une vitesse de 90 tours par minute.

Les agents d'aide au broyage à sec, qui ont été introduits dans le système, étaient sous forme d'une suspension aqueuse avec un extrait sec de 50 % massique.

Suite au broyage, le marbre broyé a été séparé des billes en porcelaine avec un tamis de maille de 1 cm. Le matériau broyé a ensuite été caractérisé par tamisage.

**Tableau 13**

| **Essai** | **T (Art Antérieur)** | **U (Invention)** |
|---|---|---|
| **Agent d'aide au broyage à sec** | MPG | PEG 6000 |
| **Quantité d'agent d'aide au broyage (ppm)***** | 1500 | 1 500 |
| **Caratéristiques du produit broyé** | | |
| **Fraction (%) de particules dont le diamètre est inférieur à :** | | |
| > 1000 µm | 2.3 | 0.1 |
| < 1000 µm | 97.7 | 99.9 |
| < 500 µm | 91.5 | 99.6 |
| < 200 µm | 63.6 | 77.5 |
| < 100 µm | 27.9 | 50.2 |
| < 50 µm | 3.5 | 7.3 |

| | | |
|---|---|---|
| *** calculé en poids sec par rapport au poids sec du matériau à broyer | | |

Les résultats du tableau 13 démontrent que le procédé selon l'invention mène à un produit plus fin et constitue donc un procédé de broyage plus efficace qu'un procédé de l'art antérieur.

## Revendications

1. Procédé de broyage à sec d'un matériau contenant un minerai carbonaté, **caractérisé en ce que** ledit procédé comprend les étapes de :
a) broyer à sec ledit matériau dans au moins une unité de broyage :
(i) en présence d'au moins un polymère polyalkylène glycol où 90 % au moins, préférentiellement 95 % au moins, très préférentiellement 98 % au moins des unités monomères formant le squelette dudit polymère sont constitués d'oxyde d'éthylène, d'oxyde de propylène, ou leurs mélanges, et dont le poids moléculaire est au moins égal à 400 g/mole,
(ii) de telle manière à ce que la quantité d'eau dans ladite unité de broyage est inférieure à 10 % en poids sec dudit matériau dans ladite unité de broyage ;
b) éventuellement classifier le matériau broyé à sec selon l'étape a) avec au moins une unité de classification ;
c) éventuellement répéter les étapes a) et / ou b) sur tout ou partie du matériau broyé issu de l'étape a) et / ou b.

2. Procédé selon la revendication 1, **caractérisé en ce qu'**on met en oeuvre de 0,01 à 0,5 % en poids sec, préférentiellement de 0,03 à 0,25 % en poids sec dudit polymère, par rapport au poids sec du matériau contenant un minerai carbonaté dans chaque unité de broyage.

3. Procédé selon l'une des revendications 1 ou 2, **caractérisé en ce que** la quantité de polymère polyalkylène glycol mise en oeuvre dans chaque unité de broyage est comprise entre 0,1 et 1 mg dudit polymère par m² de matériau contenant un minerai carbonaté, et préférentiellement comprise entre 0,2 et 0,6 mg dudit polymère par m² de matériau contenant un minerai carbonaté.

4. Procédé selon l'une des revendications 1 à 3, **caractérisé en ce que**, lorsque le polymère polyalkylène glycol est soumis à une température de 45 °C pendant une période de 16 heures, plus de 75 %, préférentiellement plus de 90 % de 50 mg dudit polymère polyalkylène glycol mis dans 50 ml d'eau ne sont pas volatilisés.

5. Procédé selon l'une des revendications 1 à 4, **caractérisé en ce que** le polymère polyalkylène glycol est un polyéthylène glycol, qui contient une fraction de monomères oxyde d'éthylène supérieure à 95 %, préférentiellement supérieure à 98 % du total des monomères, et qui présente un poids moléculaire compris entre 500 et 10 000 g/mole, préférentiellement entre 600 et 1 500 g/mole, très préférentiellement entre 600 et 1 000 g/mole.

6. Procédé selon l'une des revendications 1 à 4, **caractérisé en ce que** le polymère polyalkylène glycol est un polypropylène glycol qui contient une fraction de monomères oxyde de propylène supérieure à 95 %, préférentiellement supérieure à 98 % du total des monomères et qui présente un poids moléculaire compris entre 500 et 6 000 g/mole, préférentiellement entre 2 000 et 3 000 g/mole.

7. Procédé selon l'une des revendications 1 à 4, **caractérisé en ce que** le polymère polyalkylène glycol est un copolymère d'oxyde d'éthylène et d'oxyde de propylène.

8. Procédé selon la revendication 7, **caractérisé en ce que** ledit copolymère présente un ratio monomères d'oxyde d'éthylène:oxyde de propylène compris entre 1:5 et 5:1, ce ratio étant préférentiellement égal à 3:2.

9. Procédé selon l'une des revendications 7 ou 8, **caractérisé en ce que** ledit copolymère présente un poids moléculaire compris entre 1 000 et 5 000 g/mole, préférentiellement entre 2 000 et 3 000 g/mole.

10. Procédé selon l'une des revendications 7 à 9, **caractérisé en ce que** le copolymère est un copolymère bloc qui contient au moins un bloc d'homopolymère du polyéthylène glycol et / ou du polypropylène glycol, correspondant à au moins 20 %, préférentiellement au moins 30 %, très préférentiellement au moins 40 % du total des unités monomères oxyde d'éthylène et oxydes de propylène.

11. Procédé selon l'une des revendications 1 à 10, **caractérisé en ce qu'**on met en oeuvre un mélange de polymères polyalkylène glycol.

12. Procédé selon la revendication 11, **caractérisé en ce que** ledit mélange comprend au moins 2 polymères du type polyéthylène glycol, au moins un polymère du type polypropylène glycol, et au moins un polymère du type copolymère bloc, dans un ratio oxyde d'éthylène:oxyde de propylène compris entre 90:10 et 10:90.

13. Procédé selon l'une des revendications 1 à 12, **caractérisé en ce que** le polymère polyalkylène glycol mis en oeuvre peut être mélangé avec des agents qui ne sont pas du type polyalkylène glycol, ledit polymère polyalkylène glycol représentant au moins 50 % en poids, préférentiellement au moins 85 % en poids, et très préférentiellement au moins 95 % en poids, du poids total constitué par le polymère polyalkylène glycol et des agents qui ne sont pas du type polyalkylène glycol.

14. Procédé selon la revendication 13, **caractérisé en ce que** l'agent qui n'est pas du type polyalkylène glycol est un carbohydrate, la tri isopropyl amine, ou leurs mélanges.

15. Procédé selon la revendication 14, **caractérisé en ce que** ledit carbohydrate est un sucrose, un sorbitol, ou leurs mélanges.

16. Procédé selon l'une des revendications 1 à 15, **caractérisé en ce que** les matériaux contenant un minerai carbonaté contiennent au moins 80 %, préférentiellement au moins 90 % de minerai carbonaté par rapport au poids dudit matériau.

17. Procédé selon l'une des revendications 1 à 16, **caractérisé en ce que** le minerai carbonate est de la dolomie, du carbonate de calcium ou leurs mélanges.

18. Procédé selon la revendication 17, **caractérisé en ce que** le carbonate de calcium, est du calcaire, du marbre, de la craie, un carbonate de calcium précipité ou leurs mélanges, et plus préférentiellement du calcaire, du marbre ou leurs mélanges.

19. Procédé selon l'une des revendications 1 à 18, **caractérisé en ce que** le matériau contenant un minerai carbonaté présente un diamètre médian avant l'étape a) compris entre 0,2 et 0,7 mm et préférentiellement compris entre 0,4 et 0,5 mm, tel que mesuré en utilisant des tamis.

20. Procédé selon l'une des revendications 1 à 19, **caractérisé en ce que** l'étape b) a lieu.

21. Procédé selon l'une des revendications 1 à 20, **caractérisé en ce que** 2 étapes de classification au moins ont lieu avant toute étape ultérieure a), l'une ou l'autre de ces 2 étapes pouvant avoir lieu en série ou en parallèle.

22. Procédé selon l'une des revendications 1 à 21, **caractérisé en ce qu'**on fait re circuler une partie du matériau issu de l'étape de classification b) jusqu'à l'étape a) pour un broyage additionnel.

23. Procédé selon la revendication 22, **caractérisé en ce que** les matériaux valorisables issus de l'étape b) présentent un diamètre sphérique équivalent compris entre 0,7 et 150 µm, préférentiellement compris entre 1 et 45 µm, très préférentiellement compris entre 2 et 5 µm.

24. Procédé selon l'une des revendications 22 ou 23, **caractérisé en ce qu'**on rajoute une quantité fraîche de matériau contenant un minerai carbonaté au niveau de l'étape a).

25. Produits **caractérisés en ce qu'**ils sont obtenus par le procédé selon l'une des revendications 1 à 24.

26. Utilisation des produits selon la revendications 25, dans les domaines des mastics, des plastiques, du papier, de la peinture, et des applications pour l'agriculture.

27. Utilisation selon la revendication 26, **caractérisée en ce que** le plastique est un PVC plastifié ou non, un plastique polyéthylène, un plastique polypropylène ou leurs mélanges.

28. Utilisation selon la revendication 26, **caractérisée en ce que** le mastic comprend les silicones, les polysulfures et leurs mélanges.

29. Utilisation des produits selon la revendication 25, pour l'alimentation d'une étape ultérieure de broyage en voie humide, éventuellement en présence d'agents dispersants.

## Claims

1. A process for dry grinding of a material containing a carbonate ore, **characterised in that** the said process includes the stages of:
a) dry grinding the said material in at least one grinding unit:
(i) in the presence of at least one polyalkylene glycol polymer in which at least 90%, preferentially at least 95%, very preferentially at least 98%, of the monomer units forming the backbone of the said polymer consist of ethylene oxide, propylene oxide or their blends, and the molecular weight of which is at least equal to 400 g/mole,
(ii) in such a manner that the quantity of water in the said grinding unit is less than 10% by dry weight of the said material in the said grinding unit;
b) possibly classifying the material dry ground according to stage a) with at least one classification unit;
c) possibly repeating stages a) and/or b) on all or part of the dry ground material resulting from stages a) and/or b).

2. A process according to claim 1, **characterised in that** 0.01 to 0.5% by dry weight, and preferentially 0.03 to 0.25% by dry weight, of the said polymer is used relative to the dry weight of the material containing a carbonate ore in each grinding unit.

3. A process according to one of the claims 1 or 2, **characterised in that** the quantity of polyalkylene glycol polymer used in each grinding unit is between 0.1 and 1 mg of the said polymer per m² of material containing a carbonate ore, and preferentially between 0.2 and 0.6 mg of the said polymer per m² of material containing a carbonate ore.

4. A process according to one of the claims 1 to 3, **characterised in that**, when the polyalkylene glycol polymer is subjected to a temperature of 45° C for a period of 16 hours, more than 75%, and preferentially more than 90%, of 50 mg of the said polyalkylene glycol polymer placed in 50 ml of water is not volatilised.

5. A process according to one of the claims 1 to 4, **characterised in that** the polyalkylene glycol polymer is a polyethylene glycol, which contains a fraction of ethylene oxide monomers greater than 95%, preferentially greater than 98%, of the total monomers, and which has a molecular weight of between 500 et 10,000 g/mole, preferentially between 600 and 1,500 g/mole, very preferentially between 600 and 1,000 g/mole.

6. A process according to one of the claims 1 to 4, **characterised in that** the polyalkylene glycol polymer is a polypropylene glycol, which contains a fraction of propylene oxide monomers greater than 95%, preferentially greater than 98%, of the total monomers, and which has a molecular weight of between 500 and 6,000 g/mole, preferentially between 2,000 and 3,000 g/mole.

7. A process according to one of the claims 1 to 4, **characterised in that** the polyalkylene glycol polymer is an ethylene oxide and propylene oxide copolymer.

8. A process according to claim 7, **characterised in that** the said copolymer has an ethylene oxide:propylene oxide monomers ratio of between 1:5 and 5:1, where this ratio is preferentially equal to 3:2.

9. A process according to one of the claims 7 or 8, **characterised in that** the said copolymer has a molecular weight of between 1,000 and 5,000 g/mole, preferentially between 2,000 and 3,000 g/mole.

10. A process according to one of the claims 7 to 9, **characterised in that** the said copolymer is a block copolymer which contains at least one homopolymer block of polyethylene glycol and/or of polypropylene glycol, corresponding to at least 20%, preferentially at least 30%, very preferentially at least 40% of the total of the ethylene oxide and propylene oxide monomer units.

11. A process according to one of the claims 1 to 10, **characterised in that** a blend of polyalkylene glycol polymers is used.

12. A process according to claim 11, **characterised in that** the said blend includes at least 2 polymers of the polyethylene glycol type, at least one polymer of the polypropylene glycol type, and at least one polymer of the copolymer block type, in an ethylene oxide:propylene oxide ratio of between 90:10 and 10:90.

13. A process according to one of the claims 1 to 12, **characterised in that** the said polyalkylene glycol polymer used may be blended with agents which are not of the polyalkylene glycol type, where the said polyalkylene glycol polymer represents at least 50% by weight, preferentially at least 85% by weight, and very preferentially at least 95% by weight, of the total weight constituted by the polyalkylene polymer glycol and of the agents which are not of the polyalkylene glycol type.

14. A process according to claim 13, **characterised in that** the agent which is not of the polyalkylene glycol type is a carbohydrate, tri isopropyl amine, or their blends.

15. A process according to claims 14, **characterised in that** the said carbohydrate is a sucrose, a sorbitol, or their blends.

16. A process according to one of the claims 1 to 15, **characterised in that** the said materials containing a carbonate ore contain at least 80%, preferentially at least 90%, of carbonate ore compared to the weight of the said material.

17. A process according to one of the claims 1 to 16, **characterised in that** the carbonate ore is dolomite, calcium carbonate or their blends.

18. A process according to claim 17, **characterised in that** the said calcium carbonate is limestone, marble, chalk, a precipitated calcium carbonate or their blends, and more preferentially limestone, marble or their blends.

19. A process according to one of the claims 1 to 18, **characterised in that** the material containing a carbonate ore has a median diameter before stage a) of between 0.2 and 0.7 mm and preferentially of between 0.4 and 0.5 mm, as measured using sieves.

20. A process according to one of the claims 1 to 19, **characterised in that** stage b) takes place.

21. A process according to one of the claims 1 to 20, **characterised in that** at least 2 classification stages take place before any subsequent stage a), where either of these 2 stages may take place in series or in parallel.

22. A process according to one of the claims 1 to 21, **characterised in that** a part of the material resulting from the classification stage b) is recirculated back to stage a) for additional grinding.

23. A process according to claim 22, **characterised in that** the reusable materials originating from stage b) have an equivalent spherical diameter of between 0.7 and 150 µm, preferentially between 1 and 45 µm, very preferentially between 2 and 5 µm.

24. A process according to one of the claims 22 or 23, **characterised in that** a fresh quantity of material containing a carbonate ore is added in stage a).

25. Products **characterised in that** they are obtained by the process according to one of claims 1 to 24.

26. Use of the products according to claim 25, in the field of sealants, plastics, paper, paint, and applications for agriculture.

27. Use according to claim 26, **characterised in that** the plastic is a PVC, whether or not laminated, a polyethylene plastic, a polypropylene plastic or their blends.

28. Use according to claim 26, **characterised in that** the sealant contains silicons, polysulphides and their blends.

29. Use of the product according to claim 25, for feeding a subsequent stage of wet grinding, possibly in the presence of dispersing agents.

## Patentansprüche

1. Trockenmahlverfahren für einen carbonaterzhaltigen Werkstoff, das **dadurch gekennzeichnet ist, dass** das besagte Verfahren folgende Schritte umfasst:
a) das trockene Mahlen des besagten Werkstoffs in mindestens einer Mahleinheit
(i) in Gegenwart von mindestens einem Polyalkylen-Glykol-Polymer, bei dem mindestens 90 %, vorzugsweise mindestens 95 % und am besten mindestens 98 % der Monomereinheiten, die das Gerüst des besagten Polymers bilden, aus Ethylenoxid, Propylenoxid oder deren Gemischen bestehen und dessen Molekulargewicht mindestens 400 g/Mol beträgt,
(ii) in einer Weise, dass der Wasseranteil in der besagten Mahleinheit weniger als 10 % des Trockengewichts des besagten Werkstoffs in der besagten Mahleinheit ausmacht,
b) ggf. die Teilchengrößenklassierung des gemäß Schritt a) trocken vermahlenen Werkstoffs mit mindestens einer Klassiereinheit,
c) ggf. die Wiederholung der Schritte a) und / oder b) für das gesamte Mahlgut aus Schritt a) und / oder b) bzw. für einen Teil davon.

2. Verfahren nach Anspruch 1, **dadurch gekennzeichnet, dass** man 0,01 - 0,5 % Trockengewicht, vorzugsweise 0,03 - 0,25 % Trockengewicht des besagten Polymers bezogen auf das Gesamttrockengewicht des carbonaterzhaltigen Stoffs in jeder Mahleinheit verwendet.

3. Verfahren nach einem der Ansprüche 1 oder 2, **dadurch gekennzeichnet, dass** die in jeder Mahleinheit verwendete Menge Polyalkylen-Glykol-Polymer zwischen 0,1 und 1 mg des besagten Polymers pro m² carbonaterzhaltigen Werkstoffs und vorzugsweise zwischen 0,2 und 0,6 mg des besagten Polymers pro m² carbonaterzhaltigen Werkstoffs liegt.

4. Verfahren nach einem der Ansprüche 1 bis 3, **dadurch gekennzeichnet, dass** sich bei 16-stündiger Erhitzung auf 45°C mehr als 75 % und vorzugsweise mehr als 90 % der 50 mg des besagten in 50 ml Wasser aufgelösten Polyalkylen-Glykol-Polymers nicht verflüchtigen.

5. Verfahren nach einem der Ansprüche 1 bis 4, **dadurch gekennzeichnet, dass** das Polyalkylen-Glykol-Polymer ein Polyethylenglykol mit einem Anteil von über 95 %, vorzugsweise von über 98 % Ethylenoxid-Monomeren bezogen auf die Gesamtmenge der Monomere ist und ein Molekulargewicht zwischen 500 und 10 000 g/Mol, vorzugsweise zwischen 600 und 1 500 g/Mol und am besten zwischen 600 und 1 000 g/Mol aufweist.

6. Verfahren nach einem der Ansprüche 1 bis 4, **dadurch gekennzeichnet, dass** das Polyalkylen-Glykol-Polymer ein Polypropylenglykol mit einem Anteil von über 95 %, vorzugsweise von über 98 % Propylenoxid-Monomeren bezogen auf die Gesamtmenge der Monomere ist und ein Molekulargewicht zwischen 500 und 6 000 g/Mol, vorzugsweise zwischen 2 000 und 3 000 g/Mol aufweist.

7. Verfahren nach einem der Ansprüche 1 bis 4, **dadurch gekennzeichnet, dass** das Polyalkylen-Glykol-Polymer ein Ethylenoxid- und Propylenoxid-Copolymer ist.

8. Verfahren nach Anspruch 7, **dadurch gekennzeichnet, dass** das besagte Copolymer ein Anteilsverhältnis von Ethylenoxid-Monomeren zu Propylenoxid-Monomeren zwischen 1 : 5 und 5 : 1 aufweist, wobei das Verhältnis vorzugsweise 3 : 2 beträgt.

9. Verfahren nach einem der Ansprüche 7 oder 8, **dadurch gekennzeichnet, dass** das besagte Copolymer ein Molekulargewicht zwischen 1 000 und 5 000 g/Mol, vorzugsweise zwischen 2 000 und 3 000 g/Mol aufweist.

10. Verfahren nach einem der Ansprüche 7 bis 9, **dadurch gekennzeichnet, dass** das Copolymer ein Blockpolymer ist, das mindestens einen Homopolymerblock aus Polyethylenglykol und / oder Polypropylenglykol enthält und mindestens 20 %, vorzugsweise mindestens 30 % und am besten mindestens 40 % von allen Ethylenoxid- und Propylenoxid-Monomereinheiten ausmacht.

11. Verfahren nach einem der Ansprüche 1 bis 10, **dadurch gekennzeichnet, dass** man ein Gemisch aus Polyalkylen-Glykol-Polymeren verwendet.

12. Verfahren nach Anspruch 11, **dadurch gekennzeichnet, dass** das Gemisch aus mindestens zwei Polymeren des Typs Polyethylenglykol, mindestens aus einem Polymer des Typs Polypropylenglykol und mindestens aus einem Polymer des Typs Block-Copolymer in einem Verhältnis von Ethylenoxid zu Propylenoxid zwischen 90 : 10 und 10 : 90 besteht.

13. Verfahren nach einem der Ansprüche 1 bis 12, **dadurch gekennzeichnet, dass** das verwendete Polyalkylen-Glykol-Polymer mit Zusatzstoffen, die nicht vom Typ Polyalkylen-Glykol sind, vermischt werden kann, wobei das besagte Polyalkylen-Glykol-Polymer mindestens 50 Gew.- %, vorzugsweise mindestens 85 Gew.- % und am besten mindestens 95 Gew.- % vom Gesamttrockengewicht des Polyalkylen-Glykol-Polymers und der Zusatzstoffe, die nicht vom Typ Polyalkylenglykol sind, ausmacht.

14. Verfahren nach Anspruch 13, **dadurch gekennzeichnet, dass** der Zusatzstoff, der nicht vom Typ Polyalkylenglykol ist, ein Kohlehydrat, Tri-isopropyl-amin (TIPA) oder Gemische daraus ist.

15. Verfahren nach Anspruch 14, **dadurch gekennzeichnet, dass** das besagte Kohlehydrat ein Disaccharid (Rohrzucker), ein Sorbitol oder Gemische daraus ist.

16. Verfahren nach einem der Ansprüche 1 bis 15, **dadurch gekennzeichnet, dass** die carbonaterzhaltigen Stoffe mindestens 80 %, vorzugsweise mindestens 90 % Carbonaterz bezogen auf das Gewicht des besagten Werkstoffs enthalten.

17. Verfahren nach einem der Ansprüche 1 bis 16, **dadurch gekennzeichnet, dass** das Carbonaterz Dolomit, Calciumcarbonat oder Gemische daraus ist.

18. Verfahren nach Anspruch 17, **dadurch gekennzeichnet, dass** das Calciumcarbonat Kalkstein, Marmor, Kreide, ein ausgefälltes Calciumcarbonat oder deren Gemische, vorzugsweise aber Kalkstein, Marmor oder deren Gemische ist.

19. Verfahren nach einem der Ansprüche 1 bis 18, **dadurch gekennzeichnet, dass** der carbonaterzhaltige Werkstoff vor dem Verfahrensschritt a) einen mittleren Durchmesser zwischen 0,2 und 0,7 mm und vorzugsweise zwischen 0,4 und 0,5 mm (durch Verwendung von Sieben gemessen) aufweist.

20. Verfahren nach einem der Ansprüche 1 bis 19, **dadurch gekennzeichnet, dass** der Verfahrensschritt b) stattfindet.

21. Verfahren nach einem der Ansprüche 1 bis 20, **dadurch gekennzeichnet, dass** mindestens 2 Klassierungsschritte vor jedem weiteren Schritt a) stattfinden, wobei jeweils einer dieser zwei Schritte im Anschluss daran oder parallel dazu erfolgen kann.

22. Verfahren nach einem der Ansprüche 1 bis 21, **dadurch gekennzeichnet, dass** man einen Teil des aus dem Klassierungsschritt b) hervorgehenden Materials für ein zusätzliches Mahlen erneut Schritt a) durchlaufen lässt.

23. Verfahren nach Anspruch 22, **dadurch gekennzeichnet, dass** die in Schritt b) gewonnenen brauchbaren Mahlgüter einen Kugeläquivalenz-Durchmesser zwischen 0,7 und 150 µm, vorzugsweise zwischen 1 und 45 µm und am besten zwischen 2 und 5 µm aufweisen.

24. Verfahren nach einem der Ansprüche 22 oder 23, **dadurch gekennzeichnet, dass** eine bestimmte Menge frischen carbonaterzhaltigen Materials in Schritt a) zugegeben wird.

25. Produkte, **dadurch gekennzeichnet**, das sie durch das Verfahren nach einem der Ansprüche 1 bis 24 gewonnen werden.

26. Verwendung der Produkte gemäß Anspruch 25 in den Bereichen Kitte, Kunststoffe, Papier, Farben, Lacke und Anwendungen für die Landwirtschaft.

27. Verwendung der Produkte gemäß Anspruch 26, **dadurch gekennzeichnet, dass** der Kunststoff plastifiziertes oder nicht plastifiziertes PVC, ein Polyethylen-Kunststoff, ein Polypropylen-Kunststoff oder deren Mischungen ist.

28. Verwendung der Produkte gemäß Anspruch 26, **dadurch gekennzeichnet, dass** der Kitt Silikone, Polysulfide und deren Mischungen umfasst.

29. Verwendung der Produkte gemäß Anspruch 25 als Ausgangsmaterial für ein nachgeschaltetes Nassmahlverfahren ggf. in Gegenwart von Dispergiermitteln.
